# EUROPÄISCHE PATENTANMELDUNG

(11) **EP 2 682 038 A2**
(43) Veröffentlichungstag der Anmeldung: **08.01.2014**
(21) Anmeldenummer: 13401064.4
(22) Anmeldetag: 02.07.2013
(51) Int. Cl.: A47L 15/42

(54) **Geschirrspülmaschine und Verfahren zum Betreiben einer Geschirrspülmaschine**

(30) Priorität: 03.07.2012 DE 102012105902
(71) Anmelder: Miele & Cie. KG, 33332 Gütersloh (DE)
(72) Erfinder: Bertram, Andre, 33739 Bielefeld (DE); Dahms, Tobias, 30519 Hannover (DE); Reilmann, Michael, 33611 Bielefeld (DE); Steinmeier, Ralph, 32052 Herford (DE)

(57) **Zusammenfassung**

Die Erfindung betrifft eine Geschirrspülmaschine (1) mit einem Außengehäuse (2), einer Beschickungstür (3) und einem Sockelbereich (5), und mit einem Wärmepumpenkreislauf (15), welcher einen Ventilator (14), einen Verdampfer (16), einen Verdichter (17), einen Verflüssiger (18), eine Drosselstelle (19) und einen Strömungskreislauf (20) aufweist. Der Ventilator (14) ist dabei so ausgebildet, dass er Zuluft (11) mit einem Volumenstrom zwischen 30 m³/h und 300 m³/h, bevorzugt zwischen 50 m³/h und 150 m³/h und besonders bevorzugt zwischen 70 m³/h und 100 m³/h fördert.

## Beschreibung

Die Erfindung betrifft eine Geschirrspülmaschine mit einem Außengehäuse, einer Beschickungstür, einem Sockelbereich und mit einem Wärmepumpenkreislauf, welcher einen Ventilator, einen Verdampfer, einen Verdichter, einen Verflüssiger, eine Drosselstelle und einen Strömungskreislauf aufweist.

Eine Geschirrspülmaschine der vorbeschriebenen Art ist in der DE 102011000042.9 beschrieben. Sie verfügt über ein Außengehäuse, welches unter anderem einen Spülbehälter umgibt, in dessen Spülraum zu reinigendes Spülgut eingebracht wird. Die Geschirrspülmaschine verfügt über eine Beschickungstür, welche das Außengehäuse und insbesondere den Spülbehälter verschließt, und über einen Sockelbereich, welcher unterhalb der Beschickungstür angeordnet ist. Der Sockelbereich enthält im Wesentlichen die meisten technischen Komponenten der Geschirrspülmaschine, wie Sammeltopf, Umwälzpumpe, Wasserweiche, Laugenpumpe und so weiter. Der Sockelbereich ist in der Vorderansicht der Geschirrspülmaschine mit einem Sockel verkleidet, um eine optisch ansprechende Front, beispielsweise für die Integration in eine bestehende Küchenmöbelzeile, zu schaffen. Die Geschirrspülmaschine ist darüber hinaus mit einem Wärmepumpenkreislauf ausgestattet, um den Energieverbrauch insbesondere während der Heizphase der Maschine zu reduzieren, da der Heizvorgang den größten Anteil am Energieverbrauch der Geschirrspülmaschine verursacht. Der Wärmepumpenkreislauf weist insbesondere einen Verdampfer, einen Verdichter, einen Verflüssiger, eine Drosselstelle und einen diese Komponenten verbindenden Strömungskreislauf auf.

Die DE 102011000042.9 beschreibt insbesondere ein Verfahren zum Aufheizen der Geschirrspülmaschine, insbesondere zum Aufheizen von Spülflotte, mit einer Luft-Wasser-Wärmepumpe. Dabei saugt die Geschirrspülmaschine während der Heizphase Raumluft (Zuluft) an, welche über den Verdampfer der Wärmepumpe geleitet und abgekühlt wird. Die entzogene Wärmeenergie aus der Raumluft wird auf ein Arbeitsmedium (Kältemittel) übertragen und anschließend mittels des Verdichters komprimiert und somit auf ein höheres Temperaturniveau gebracht. Schließlich kondensiert das heiße Kältemittel an dem Verflüssiger und heizt die Spülflotte auf. Die aus dem Verdampfer austretende kalte Luft (Abluft) wird aus der Geschirrspülmaschine herausgeleitet.

Obwohl sich die beschriebene Geschirrspülmaschine mit Wärmepumpenkreislauf, insbesondere in Bezug auf deren Energieeffizienz, bewährt haben, besteht weiterer Verbesserungsbedarf. Dieser Verbesserungsbedarf betrifft insbesondere die durch den Luftvolumenstrom der Zuluft bedingte Geräuschkulisse sowie den fühlbaren Luftstrom der Abluft.

Der zum Heizen der Geschirrspülmaschine benötigte Luftvolumenstrom liegt deutlich über den von Trocknungssystemen in konventionellen Geschirrspülmaschinen geförderte Luftvolumenstrom. Da der Heizvorgang typischerweise einen zeitlichen Anteil von über 50% am gesamten Spülprogramm aufweist, wird dieser Luftvolumenstrom über eine große Zeitspanne benötigt. Die von Trocknungssystemen nach dem Stand der Technik bekannten Lufteinlässe und Luftauslässe, Luftkanäle sowie der Ventilator sind für diese Größenordnung des Luftvolumenstroms jedoch nicht geeignet und/oder verursachen beim Betrieb der Geschirrspülmaschine einen erhöhten, störenden Geräuschpegel. Dies ist insbesondere für diejenigen Benutzer ärgerlich, welche die Geschirrspülmaschine in kleineren Wohnräumen, zum Beispiel 1-Zimmer-Appartments, betreiben und sich in unmittelbarer Nähe der Geschirrspülmaschine aufhalten.

Der auftretende hohe Abluftstrom bewirkt des Weiteren eine fühlbare Luftbewegung innerhalb der Räumlichkeiten. Ebenso kann es je nach räumlicher Anordnung der Luftein- und auslässe am Außengehäuse der Geschirrspülmaschine zu Kurzschlusserscheinungen kommen, wodurch die aus der Geschirrspülmaschine abgeführte, kalte Abluft wieder als Zuluft in die Geschirrspülmaschine eingesaugt wird. Dies führt dazu, dass der Wärmepumpenkreislauf keine ausreichende Temperaturdifferenz zur Verfügung hat und somit in seiner Funktion beeinträchtigt wird.

Es ist daher die **Aufgabe** der Erfindung, eine neuartige Geschirrspülmaschine und ein Verfahren zum Betreiben der Geschirrspülmaschine vorzuschlagen, wodurch die genannten Nachteile verhindert werden. Weiterhin ist es Aufgabe der Erfindung, einen geeigneten Arbeitspunkt des Wärmepumpenkreislaufes, insbesondere des Verdampfers, festzulegen, welcher in Hinblick auf Energieeffizienz und Betriebssicherheit der Geschirrspülmaschine optimal ist.

Zur **Lösung** dieser Aufgabe wird mit der Erfindung eine Geschirrspülmaschine und ein Verfahren gemäß den unabhängien Ansprüchen vorgeschlagen. Vorteilhafte Weiterbildungen sind in den Unteransprüchen oder der Beschreibung enthalten.

Die erfindungsgemäße Geschirrspülmaschine weist eine Luft-Wasser-Wärmepumpe zum Aufheizen von Spülflotte auf mit einem Wärmepumpenkreislauf, welcher einen Ventilator, einen Verdampfer, einen Verdichter, einen Verflüssiger eine Drosselstelle und einen Srömungskreislauf umfasst. Dabei wird mit dem Ventilator während der Heizphase eines Spülprogramms Zuluft gefördert, beispielsweise angesaugt. Diese wird über den Verdampfer der Wärmepumpe geleitet und dadurch abgekühlt. Die entzogene Wärmeenergie aus der Zuluft wird auf ein Kältemittel übertragen und anschließend mittels des Verdichters komprimiert und somit auf ein höheres Temperaturniveau gebracht. Schließlich kondensiert das heiße Kältemittel an dem Verflüssiger und heizt dabei die Spülflotte auf. Die aus dem Verdampfer austretende kalte Abluft wird aus der Geschirrspülmaschine geleitet.

Die Geschirrspülmaschine, etwa eine Haushaltgeschirrspülmaschine, weist einen mit einer Beschickungstür in an sich bekannter Weise verschließbaren Spülraum auf. Während eines Spülprogramms wird das im Spülraum befindliche Spülgut zunächst gespült und anschließend getrocknet. Das Spülen umfasst typischerweise mehrere wasserführende Programmabschnitte, etwa die Programmabschnitte REINIGEN und KLARSPÜLEN. Im Spülbetrieb, also während wasserführender Programmabschnitte ist der Spülraum durch die Beschickungstür verschlossen.

Bei der vom Ventilator geförderten Zuluft, welche die Wärmequelle der Wärmepumpe darstellt, handelt es sich um Raumluft, also Luft aus dem Aufstellungsraum der Geschirrspülmaschine etwa der Küche, die insbesondere eine für derartige Räume übliche Umgebungstemperatur aufweist, also ca. 15 bis 25°C. Die Förderung der Zuluft bzw. Raumluft erfolgt während der Heizphase eines Spülprogramms, bei der Spülflotte aufgeheizt wird, insbesondere also während eines wasserführenden Programmabschnittes. Die Förderung der Zuluft erfolgt somit insbesondere bei geschlossener Beschickungstür.

Der Ventilator ist so ausgebildet, dass er Zuluft mit einem Volumenstrom zwischen 30 m³/h und 300 m³/h fördert. Vorzugsweise beträgt der förderbare oder geförderte Volumenstrom jedoch zwischen 50 m³/h und 150 m³/h, besonders bevorzugt zwischen 70 m³/h und 100 m³/h. Auf diese Weise kann eine hinreichende Wärmeleistung erzielt werden, so dass die Spülflotte in akzeptabler Zeit auf eine für das Spülprogramm erforderliche Temperatur erhitzt werden kann. Insbesondere kann erfindungsgemäß auf eine zusätzliche Heizung zur Erwärmung der Spülflotte verzichtet werden.

Vorzugsweise ist der Ventilator in Strömungsrichtung der Zuluft hinter dem Verdampfer angeordnet. Der Ventilator saugt die Zuluft somit an, wodurch die Srömung die der Zuluft erzeugt wird bzw. deren Strömungsrichtung gegeben ist, und leitet sie auf diese Weise über den Verdampfer. Der Ventilator verursacht im Betrieb aufgrund des hohen Volumenstroms einen gewissen erhöhten Geräuschpegel. Durch die vorgezogene Anordnung hinter dem Verdampfer befindet sich die durch den Ventilator dargestellte Geräuschquelle jedoch vergleichsweise weit entfernt von der Wandung des Außengehäuses. Dadurch wird die Geräuschkulisse moderat gehalten.

Wenn der Ventilator die Zuluft über oder durch den Verdampfer saugt, wird der Luftstrom im oder am Verdampfer abgekühlt. Der kalte Luftstrom wird über den Ventilator als Abluft weggeleitet. Die Hintereinanderanordnung von Verdampfer und Ventilator in dieser Reihenfolge weist - neben der Geräuschreduzierung - den Vorteil auf, dass durch das Ansaugen am oder hinter dem Verdampferausgang der Verdampfer gleichmäßig durchströmt wird. Durch diese homogene Durchströmung kann der Wärmetauscher mit erhöhtem Wirkungsgrad arbeiten, denn alle Wärmeübertragungsflächen werden gleichmäßig mit Zuluft beaufschlagt. Ebenso ist es in vielen Fällen ohne Weiteres möglich, die Anordnung ohne zusätzliche Strömungskonditionierung, beispielsweise einen Strömungsgleichrichter zu verwenden. Der technische und materielle Aufwand bleibt somit gering.

Die Erfindung sieht weiterhin vor, dass der Sockelbereich, insbesondere der Sockel, einen oder mehrere Lufteinlässe für die Zuluft aufweist. Alternativ oder zusätzlich kann auch die Beschickungstür einen oder mehrere Lufteinlässe aufweisen.

Die korrespondierenden Luftauslässe sind gemäß einem Ausführungsbeispiel an der der Beschickungstür gegenüberliegenden Seite des Außengehäuses angeordnet. Hierdurch kann der Austritt des Abluftstroms weit entfernt vom Benutzer erfolgen.

Alternativ oder zusätzlich können die Luftauslässe ebenfalls an einer der an die Beschickungstür angrenzenden Seitenwände des Außengehäuses angeordnet sein. Vorzugsweise befinden sich Auslässe jedoch an zumindest zwei Seitenwänden des Außengehäuses. Besonders bevorzugt ist dabei, wenn vor dem Austreten des Abluftstroms aus den Luftauslässen eine Aufteilung des Abluftstroms in mehrere in unterschiedliche, vorzugsweise orthogonale, Richtungen strömende Teilluftströme erfolgt. Die Aufteilung des Abluftstroms erfolgt somit in der Geschirrspülmaschine, insbesondere im Sockelbereich. Vorzugsweise sind Luftauslässe insbesondere an beiden an die Beschickungstür angrenzenden Seitenwände des Außengehäuses angeordnet sind und der Luftauslass aus der Geschirrspülmaschine erfolgt somit in zumindest zwei in entgegengesetzte Richtungen strömende Teilströme.

Durch die erfindungsgemäße geometrische Anordnung, welche die Lufteinlässe an der Frontseite der Geschirrspülmaschine, das heißt im Sockelbereich, im Sockel oder in der Beschickungstür, vorsieht, während dagegen die Luftauslässe an den Seiten und/oder der Rückwand des Außengehäuses angeordnet sind, entsteht im Frontbereich der Geschirrspülmaschine trotz des erfindungsgemäß hohen Volumenstroms kein fühlbarer Luftzug durch aus dem Außengehäuse strömende kalte Abluft. Ein austretender konzentrierter Luftstrom wäre hier deutlich als Luftzug fühlbar. Daher ist es vorteilhaft, die Zuluft frontseitig anzusaugen und die Abluft, welche deutlich kühler ist als die Zuluft, seitlich oder im Rückenbereich der Geschirrspülmaschine unter den angrenzenden Küchenschrankbereich zu leiten. Über Undichtigkeiten bzw. extra dafür vorgesehene Luftaustrittsgitter im Sockel der Küchenschränke, kann so ein diffuses Abströmen erzielt werden.

Die Raumluft (Zuluft) wird im vorderen Bereich der Geschirrspülmaschine entweder über oder durch eine Sockelleiste angesaugt. Hierzu wird sie entweder ganz oder teilweise über einen Freiraum bzw. einen Einschwenkbereich der Tür geleitet.

In vorteilhafter Ausgestaltung sind der Lufteinlass und die Luftauslässe mit einem Gitter versehen. Dies verhindert das ungewollte Eindringen von Fremdkörpern oder das Hineingreifen einer Person in die Öffnungen. Zusätzlich kann das Gitter derart ausgestaltet sein, dass es gleichzeitig als Strömungskonditionierelement dient und sich die Strömungsparameter, wie beispielsweise die Strömungsrichtung und Strömungsgeschwindigkeit, vorteilhaft beeinflussen lassen. Übliche Ausgestaltungen für

Gitter in Luftein- bzw. auslässen sind Lamellengitter, Gitternetze oder auch Lochbleche.

Um ein Verschmutzen der Luftwege und der darin befindlichen Komponenten, wie zum Beispiel Ventilator, Lüfterrad oder Verdampfer, zu verhindern, schlägt die Erfindung weiterhin vor, dass der oder die Lufteinlässe Filter aufweisen. Ein solcher Filter kann beispielsweise in den Sockel der Geschirrspülmaschine eingelassen oder in die Sockelleiste der Küche einbringbar sein, so dass der Benutzer den Filter leicht reinigen oder gar austauschen kann. Eine Austauschbarkeit lässt sich beispielsweise durch ein Clip-Element erreichen. Vorzugsweise ist durch das Entnehmen des Filters insbesondere der Verdampfer zur Reinigung zugänglich.

Vorzugsweise ist einem oder dem Lufteinlass und insbesondere dessen Filter ein Beruhigungsbereich vorgeschaltet, in dem eine Strömungsberuhigung des Zuluftstroms erfolgt. Im Beruhigungsbereich soll also die Luftgeschwindigkeit des Zuluftstroms derart vemindert werden, dass größere Partikel nicht angesaugt werden und dadurch die Filterleistung unzulässig verringert wird. Der Beruhigungsbereich bewirkt somit, dass sich derartige Partikel, welche bereits in den Sockelbereich gelangt sind, noch vor dem Erreichen des Filters absetzen. Der Beruhigungsbereich wird beispielsweise durch einen im Sockelbereich befindlichen Freiraum gebildet, welcher einer durch die Beschickungstür und/oder der Türverkleidung und dem Sockel der Geschirrspülmaschine bewirkten Strömungsverengung nachgeordnet ist.

In einer besonderen Ausgestaltung wird die Beruhigungsstrecke durch die Beschickungstür 3 oder Türverkleidung 3a, der Sockelleiste 8 und den Freiraum 7 gebildet.

Schließlich sieht die Erfindung vor, dass der Wärmepumpenkreislauf so ausgebildet ist, dass Zuluft und Abluft eine Temperaturdifferenz zwischen 5K und 15K, insbesondere zwischen 8K und 10K aufweisen. Diese Temperaturdifferenzen sind geeignet, um den Wärmepumpenkreislauf effektiv zu betreiben und somit eine möglichst schnelle Aufheizung der Geschirrspülmaschine zu erreichen, jedoch gleichzeitig die Temperaturdifferenz nicht so groß werden zu lassen, dass die aus der Geschirrspülmaschine abgeführte Abluft für den Verwender deutlich als kalte Luftströmung wahrzunehmen ist. Bei einem Luftvolumenstrom von beispielsweise 100 m³/h, der um eine Temperaturdifferenz von 10 K durch einen Verdampfer abgekühlt wird, werden ca. 330 Watt sensible Kühlleistung benötigt. Dies reicht aus, um eine Haushaltsspülmaschine in einer noch akzeptablen Zeitspanne mit einer Wärmepumpe aufzuheizen.

Die erfindungsgemäße Konstruktion erbringt gegenüber dem Stand der Technik insgesamt insbesondere folgende Vorteile:
- Der vom Ventilator förderbare Volumenstrom der Zuluft weist einen Bereich auf, welcher für die Energieeffizienz und Betriebssicherheit der Geschirrspülmaschine optimal ausgewählt ist.
- Die erzielbare Wärmeleistung der Wärmepumpe reicht aus, um die Geschirrspülmaschine in einer noch akzeptablen Zeitspanne ohne eine zusätzliche Heizeinrichtung aufzuheizen.
- Die Anordnung des Ventilators in Strömungsrichtung der in den Wärmepumpenkreislauf eingeleiteten Zuluft hinter dem Verdampfer bewirkt eine deutliche Verringerung der von der Geschirrspülmaschine, insbesondere dem Ventilator erzeugten Geräusche.
- Indem der Ventilator hinter dem Verdampfer angeordnet ist, ergibt sich eine homogene Durchströmung der Zuluft durch den Verdampfer, was wiederum einen optimalen Wirkungsgrad des Wärmetauschers zur Folge hat.
- Spürbare Luftströmungen im Frontbereich der Geschirrspülmaschine werden verhindert, indem die Luftauslässe im Seitenbereich oder Rückenbereich des Außengehäuses angeordnet sind. Daher ist die kalte Abluft nicht für den Verwender spürbar.
- Eine Kurzschlusserscheinung zwischen Zuluft und Abluft wird wirksam vermieden, da sich die Lufteinlässe und Luftauslässe an unterschiedlichen Seiten der Geschirrspülmaschine befinden.
- Die im Wärmepumpenkreislauf eingestellte Temperaturdifferenz zwischen Zuluft und Abluft sorgt ebenfalls für erhöhte Energieeffizienz und Betriebssicherheit der Geschirrspülmaschine.

Es ergibt sich damit alles in allem eine gegenüber dem Stand der Technik deutlich verbesserte Führung von Zuluft und Abluft sowie eine wesentlich geringere Geräuschkulisse während des Heizvorganges der Geschirrspülmaschine.

Weitere Vorteile und Merkmale der Erfindung ergeben sich aus der nachfolgenden Beschreibung anhand der Figuren.

Dabei zeigen:
- Figur 1: eine Geschirrspülmaschine in perspektivischer Ansicht von vorne;
- Figur 2: die Geschirrspülmaschine nach Figur 1 in einer Seitenansicht;
- Figur 3: eine Geschirrspülmaschine in perspektivischer Frontansicht mit Lufteinlass- und Luftauslassöffnungen;
- Figur 4: die Geschirrspülmaschine gemäß Figur 3 in einer Seitenansicht;
- Figur 5: die Geschirrspülmaschine gemäß Figuren 3 und 4 in einer Draufsicht;
- Figur 6: eine Geschirrspülmaschine in perspektivischer Frontansicht mit Lufteinlässen und Luftauslässen;
- Figur 7: die Geschirrspülmaschine gemäß Figuren 3 und 6 in einer Draufsicht;
- Figur 8: eine weitere Ausgestaltung einer Geschirrspülmaschine in perspektivischer Frontansicht;
- Figur 9: eine weitere Ausgestaltung einer Geschirrspülmaschine in perspektivischer Frontansicht;
- Figur 10: eine weitere Ausgestaltung einer Geschirrspülmaschine in perspektivischer Frontansicht;
- Figur 11: eine weitere Ausgestaltung einer Geschirrspülmaschine in perspektivischer Frontansicht;
- Figur 12: eine weitere Ausgestaltung einer Geschirrspülmaschine in perspektivischer Frontansicht;
- Figur 13: ein schematischer Aufbau eines Wärmepumpenkreislaufes;
- Figur 14: eine schematische Anordnung des Wärmepumpenkreislaufes gemäß Figur 13 in einer Geschirrspülmaschine in einer Draufsicht;
- Figur 15: eine Seitenansicht eines unteren Teilbereichs der Geschirrspülmaschine mit angeordnetem Wärmepumpenkreislauf gemäß Figur 13.

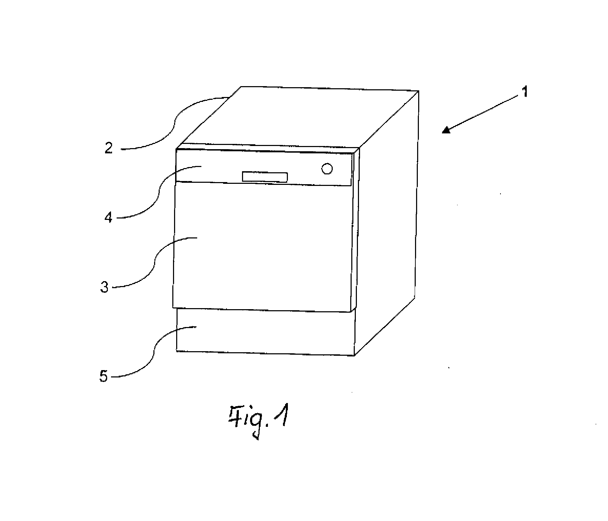

Figur 1 zeigt eine Geschirrspülmaschine 1 mit einem Außengehäuse 2, einer Beschickungstür 3 sowie einer Bedienblende 4 und einem Sockelbereich 5. Das Außengehäuse 2 umschließt den nicht dargestellten Spülraum, Heizung, Körbe, Spülarme und so weiter. Der Sockelbereich 5 enthält die nicht dargestellten Komponenten Sammeltopf, Umwälzpumpe, Wasserweiche, Laugenpumpe und weitere dem Fachmann bekannte Komponenten. Die dargestellte Geschirrspülmaschine 1 ist ohne den erfindungsgemäßen Luftkreislauf dargestellt.

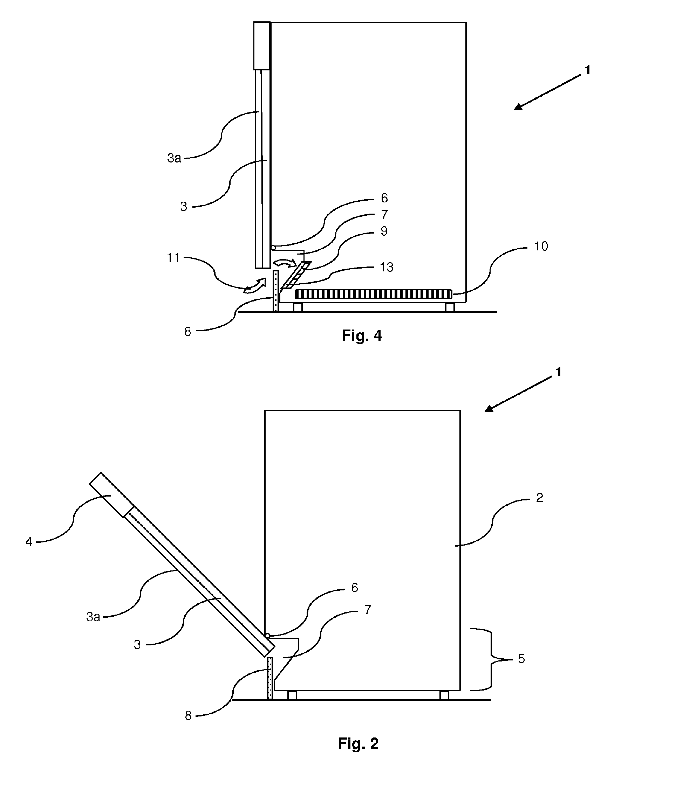

In Figur 2 ist die Seitenansicht der Geschirrspülmaschine 1 gemäß Figur 1 abgebildet. Zu erkennen ist die Beschickungstür 3, die über einen Drehpunkt 6 in einen Freiraum 7 einschwenkt. Der Freiraum 7 und eine nicht dargestellte Bodenbaugruppe sind durch einen Sockel 8 verkleidet.

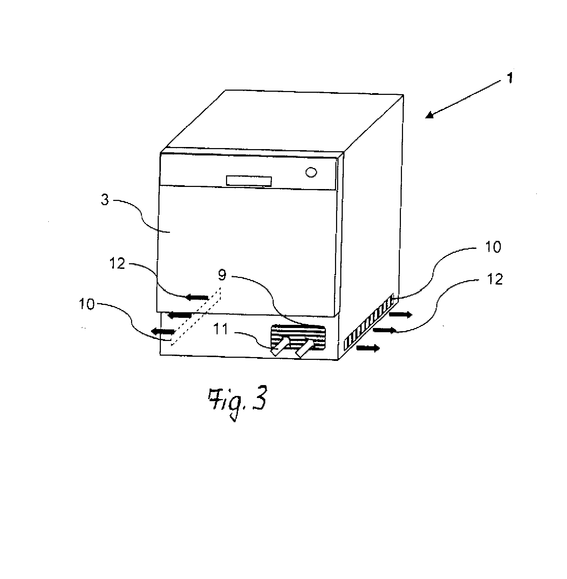

Figur 3 zeigt eine Ausführungsvariante einer erfindungsgemäßen Geschirrspülmaschine 1, die eine Luftansaugung 9 für Zuluft 11 (gekennzeichnet als weiß gefüllte Pfeile) im vorderen Bereich der Bodenbaugruppe unterhalb der Beschickungstür 3 aufweist. Schwarz gefüllte Pfeile verdeutlichen die Abluft 12, welche über die Luftauslässe 10 an den Seiten der Geschirrspülmaschine 1 abgeleitet wird. Die ausgewählte Strömungsrichtung hat den Vorteil, dass unter der Beschickungstür 3 die Zuluft 11 angesaugt wird und somit vor der Geschirrspülmaschine 1 keine Zugerscheinungen auftreten. Ein austretender konzentrierter Luftstrom wäre hier deutlich als Zugluft fühlbar.

Daher ist es vorteilhaft, die Zuluft 11 frontseitig anzusaugen und die Abluft 12 seitlich unter den Sockel der angrenzenden Küchenschränke zu leiten. Über Undichtigkeiten beziehungsweise Luftaustrittsgitter dort kann ein Abströmen der Abluft 12 erzielt werden.

Wie in Figur 4, welche eine Seitenansicht der in Figur 3 gezeigten Geschirrspülmaschine 1 darstellt, gezeigt, kann die Zuluft 11 im vorderen Bereich der Geschirrspülmaschine 1 entweder über oder durch den Sockel 8 angesaugt werden. Hierzu wird die Zuluft 11 entweder ganz oder teilweise über den Freiraum 7 beziehungsweise den Einschwenkbereich der Beschickungstür 3 geleitet. In vorteilhafter Ausgestaltung sind der Lufteinlass 9 und die Luftauslässe 10 mit einem nicht dargestellten Gitter versehen. Dies verhindert das ungewollte Eindringen von Fremdkörpern beziehungsweise das Hineingreifen einer Person in den Lufteinlass 9 beziehungsweise in die Luftauslässe 10.

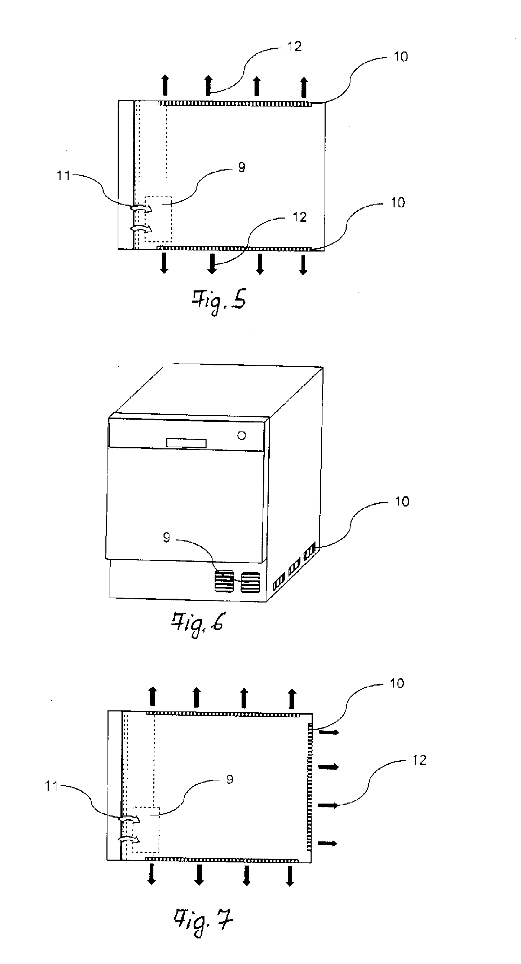

Figur 5 zeigt die Geschirrspülmaschine 1 gemäß Figur 4 in einer Draufsicht.

Die Figuren 6 bis 12 sind weitere mögliche Ausgestaltungsformen und Anordnungen der Lufteinlässe 9 und Luftauslässe 10. Die Luftströmung erfolgt, wenn nicht anders dargestellt, wie zuvor beschrieben. Ein Umdrehen der Luftstromrichtung ist aber durchaus vorstellbar und kann in bestimmten Einbausituationen Vorteile bringen.

Figur 6 zeigt zwei nebeneinanderliegende Lufteinlässe 9 sowie mehrere, nämlich hier ohne Beschränkung der Allgemeinheit drei, nebeneinander seitlich angeordnete Luftauslässe 10.

In Figur 7 ist ein zusätzlicher hinterer Luftauslass 10 im Sockelbereich 5 der Geschirrspülmaschine 1 dargestellt. Die in Figur 5 dargestellte Form mit zwei seitlichen Luftauslässen 10 könnte einen Nachteil in manchen Einbausituationen der Geschirrspülmaschine 1 hervorrufen. Wenn eine Seite der Geschirrspülmaschine 1 durch einen tiefen Unterschrank, zum Beispiel einen Herd mit einer Backblechschublade, verstellt wird, kann dies eine Luftmengenreduzierung verursachen. Mit einem zusätzlichen Luftauslass 10 kann die Luftmenge und somit der effiziente Betrieb des Wärmepumpenkreislaufes 15 sichergestellt werden.

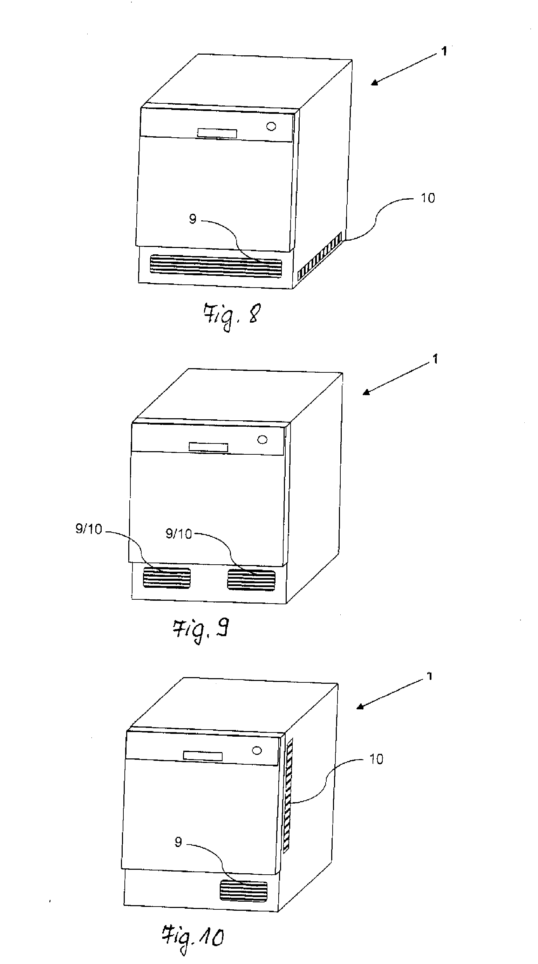

Figur 8 zeigt eine Geschirrspülmaschine 1, bei welcher der Lufteinlass 9 über annähernd die gesamte Höhe und Breite des Sockels 8 ausgebildet ist. Der Luftauslass 10 erstreckt sich ebenfalls über die gesamte Tiefe des Außengehäuses 2 der Geschirrspülmaschine 1.

Gemäß Figur 9 sind im Frontbereich der Geschirrspülmaschine 1 die Lufteinlässe 9 und Luftauslässe 10 in der gleichen Ebene im Sockel 8 angeordnet.

Figur 10 zeigt eine Geschirrspülmaschine 1 mit einem Lufteinlass 9 im Sockel 8. Die Luftauslässe 10 sind an der Seite des Außengehäuses 2 angrenzend an die Beschickungstür 3 angeordnet. Der Luftstrom der Abluft 12 tritt somit über die Fugen zwischen Geschirrspülmaschine 1 und beispielsweise einem nicht dargestellten Einbauschrank aus.

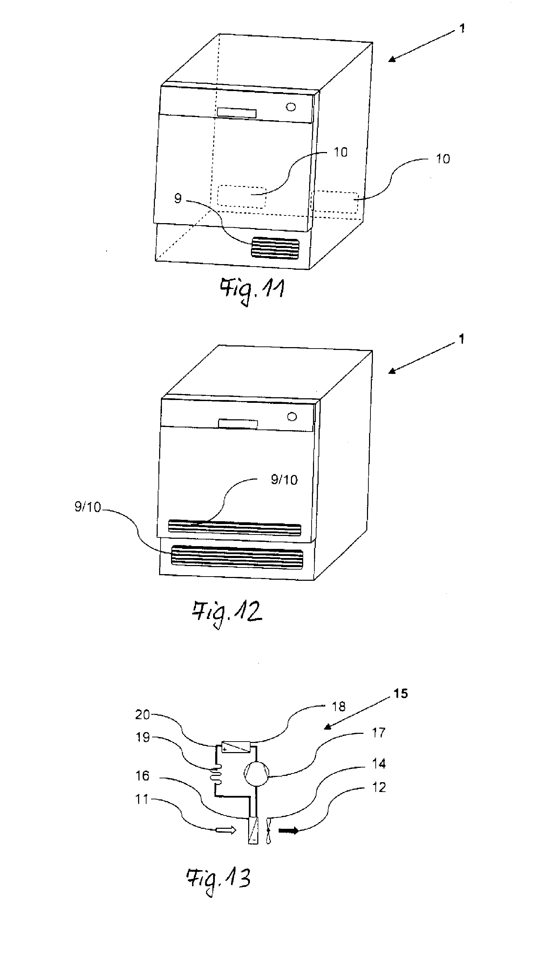

Figur 11 zeigt eine Geschirrspülmaschine 1 mit einem Lufteinlass 9 im Sockel 8. Luftauslässe 10 sind an der Rückseite der Geschirrspülmaschine 1 angeordnet.

Figur 12 zeigt eine Variante der Geschirrspülmaschine 1 gemäß Figur 9. Gemäß Figur 12 ist jeweils ein Lufteinlass 9 im Sockel 8 der Geschirrspülmaschine 1 angeordnet, während ein Luftauslass 10 in der Beschickungstür 3 angeordnet ist. Alternativ ist eine umgekehrte Anordnung denkbar, mit dem Lufteinlass 9 in der Beschickungstür 3 und dem Luftauslass 10 im Sockel 8.

Figur 13 zeigt einen schematischen Aufbau eines Wärmepumpenkreislaufes 15 mit den Komponenten Verdampfer 16, Verdichter 17, Verflüssiger 18, Drosselstelle 19 und Strömungskreislauf 20.

Ein Ventilator 14 saugt die idealerweise gefilterte Zuluft 11 durch den Verdampfer 16. Hierbei wird die Zuluft 11 im Verdampfer 16 abgekühlt. Der kalte Luftstrom wird über den Ventilator 14 als Abluft 12 weggeleitet. Damit dies funktioniert, müssen Lufteinlass 9, Verdampfer 16, Ventilator 14 und Luftauslass 10 über einen Luftweg 21 verbunden sein. Die Anordnung des Ventilators 14 in Strömungsrichtung gesehen hinter dem Verdampfer 16 weist den Vorteil auf, dass durch das Ansaugen der Zuluft 11 am Ausgang des Verdampfers 16 der Verdampfer 16 gleichmäßig durchströmt wird. Die homogene Durchströmung wiederum hat den Vorteil, dass der Wärmepumpenkreislauf 15 mit optimalem Wirkungsgrad arbeiten kann, denn alle Wärmeübertragungsflächen werden gleichmäßig mit Zuluft 11 beaufschlagt.

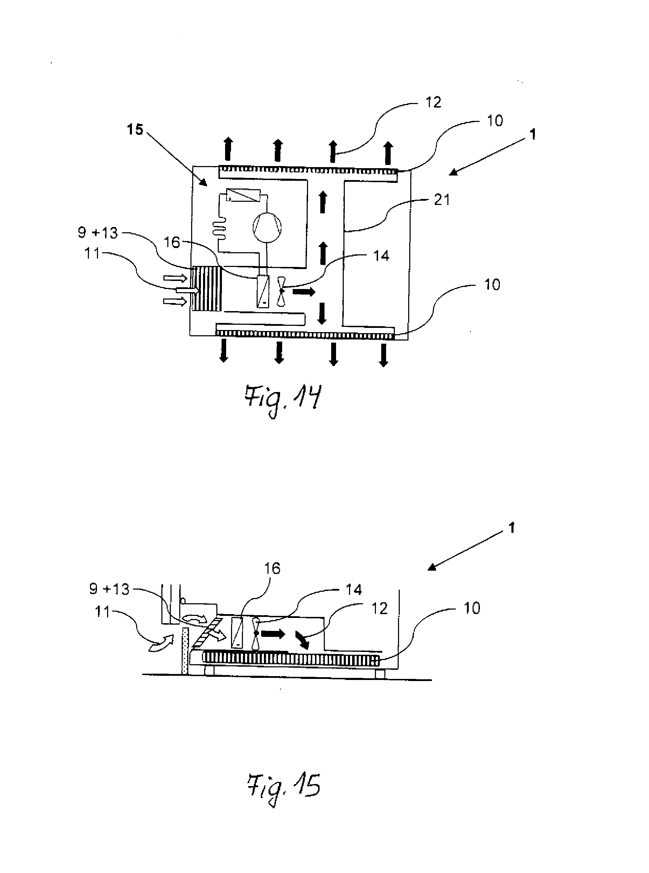

Figur 14 zeigt den in Figur 13 dargestellten Wärmepumpenkreislauf 15, welcher in einer Geschirrspülmaschine 1 angeordnet ist. Ebenso ist der Luftweg 21 im Bereich des Wärmepumpenkreislaufes 15 dargestellt.

Figur 15 zeigt den in eine Geschirrspülmaschine 1 eingebauten Wärmepumpenkreislauf 15 gemäß Figur 14 in einer Seitenansicht. Am Lufteinlass 9 ist ein nicht näher dargestelltes Filterelement 13 angeordnet. Der Filter 13 ist vorzugsweise so ausgebildet, dass er leicht entnehmbar und somit leicht zu reinigen ist. Dies lässt sich am einfachsten über die Vorderseite der Geschirrspülmaschine 1 erreichen. Insbesondere bei Einbaugeschirrspülmaschinen ist es zudem sinnvoll, dass der Filter 13 in die Sockelleiste 8, die Bestandteil der Küchensockelleiste sein kann, eingebaut wird. So wäre der Filter 13 leicht entnehmbar. Diese Anordnung hat den Vorteil, dass die Geschirrspülmaschine 1 zur Entnahme und oder Reinigung des Filters 13 nicht ausgebaut oder verschoben werden muss. Vorzugsweise soll die Filterreinigung auch ohne Entnahme möglich sein. Der Filter kann beispielsweise mit einem Staubsauger abgesaugt werden.

Durch die Entnahme des Filters kann zudem die Reinigung des dahinterliegenden Verdampfers 16 ermöglicht werden. Um die Reinigungsintervalle des Filters 13 beziehungsweise des Verdampfers 16 zu verlängern, wird außerdem eine Rückspülung durch das vorhandene Gebläse 14 vorgeschlagen. Weiterhin ist es vorteilhaft wenn der Filter 13 in horizontaler Lage angeordnet ist und von unten durchströmt wird.

Um die Beladung am Filter weiter zu reduzieren wird weiterhin vorgeschlagen, dass ein Beruhigungsbereich dem Filterelement 13 vorgeschaltet ist. In dem Beruhigungsbereich soll die Luftgeschwindigkeit derart vemindert werden, dass größere Partikel nicht angesaugt werden und dadurch die Filterleistung unzulässig verringert wird. In einer besonderen Ausgestaltung wird der Beruhigungsbereich durch die Beschickungstür 3 oder Türverkleidung 3a, der Sockelleiste 8 und den Freiraum 7 gebildet.

### Bezugszeichen

- 1: Geschirrspülmaschine
- 2: Außengehäuse
- 3: Beschickungstür
- 3a: Türverkleidung/Türfront
- 4: Bedienblende
- 5: Sockelbereich
- 6: Drehpunkt
- 7: Freiraum
- 8: Sockel
- 9: Lufteinlass
- 10: Luftauslass
- 11: Zuluft
- 12: Abluft
- 13: Filter
- 14: Ventilator
- 15: Wärmepumpenkreislauf
- 16: Verdamfer
- 17: Verdichter
- 18: Verflüssiger
- 19: Drosselstelle
- 20: Strömungskreislauf
- 21: Luftweg

## Patentansprüche

1. Geschirrspülmaschine (1) mit einem Außengehäuse (2), einer Beschickungstür (3) und einem Sockelbereich (5),
und mit einem Wärmepumpenkreislauf (15), welcher einen Ventilator (14), einen Verdampfer (16), einen Verdichter (17), einen Verflüssiger (18), eine Drosselstelle (19) und einen Strömungskreislauf (20) aufweist,
wobei der Ventilator (14) so ausgebildet ist, dass er Zuluft (11) mit einem Volumenstrom zwischen 30 m³/h und 300 m³/h, bevorzugt zwischen 50 m³/h und 150 m³/h und besonders bevorzugt zwischen 70 m³/h und 100 m³/h fördert.

2. Geschirrspülmaschine (1) nach Anspruch 1,
**dadurch gekennzeichnet,**
**dass** der Ventilator (14) in Strömungsrichtung der Zuluft (11) hinter dem Verdampfer (16) angeordnet ist.

3. Geschirrspülmaschine (1) nach einem der vorhergehenden Ansprüche,
**dadurch gekennzeichnet,**
**dass** der Sockelbereich (5) einen oder mehrere Lufteinlässe (9) für die Zuluft (11) aufweist.

4. Geschirrspülmaschine (1) nach einem der vorhergehenden Ansprüche,
**dadurch gekennzeichnet,**
**dass** die Beschickungstür (3) einen oder mehrere Lufteinlässe (9) aufweist.

5. Geschirrspülmaschine (1) nach einem der Ansprüche 3 oder 4,
**dadurch gekennzeichnet,**
**dass** einem oder dem Lufteinlass (9) ein Beruhigungsbereich vorgeschaltet ist, in dem eine Strömungsberuhigung des Zuluftstroms erfolgt.

6. Geschirrspülmaschine (1) nach einem der vorhergehenden Ansprüche,
**dadurch gekennzeichnet,**
**dass** das Außengehäuse (2) einen oder mehrere Luftauslässe (10) für die Abluft (12) aufweist.

7. Geschirrspülmaschine (1) nach einem der vorhergehenden Ansprüche,
**dadurch gekennzeichnet,**
**dass** ein, mehrere oder alle Luftauslässe (10) an der der Beschickungstür (3) gegenüberliegenden Seite des Außengehäuses (2) und/oder an einer oder beiden der an die Beschickungstür (3) angrenzenden Seitenwände des Außengehäuses (2) angeordnet sind.

8. Geschirrspülmaschine (1) nach einem der vorhergehenden Ansprüche,
**dadurch gekennzeichnet,**
**dass** ein oder die Lufteinlässe (9) mindestend einen Filter (13) oder jeweils einen Filter aufweisen, wobei der Filter (13) vorzugsweise entnehmbar ist und dadurch der Verdampfer (16) zur Reinigung zugänglich wird, und/oder dass ein oder die Lufteinlässe (9) Strömungskonditionierelemente aufweisen.

9. Geschirrspülmaschine (1) nach einem der vorhergehenden Ansprüche,
**dadurch gekennzeichnet,**
**dass** der Wärmepumpenkreislauf (15) so ausgebildet ist, dass Zuluft (11) und Abluft (12) eine Temperaturdifferenz zwischen 5K und 15K, insbesondere zwischen 8K und 10K, aufweisen.

10. Verfahen zum Betreiben einer Geschirrspülmaschine (1), insbesondere einer Geschirrspülmaschine nach einem der vorhergehenden Ansprüche, mit einem Spülprogramm, bei dem Spülflotte mittels eines Wärmepumpenkreislaufs (15) aufgeheizt wird, welcher einen Ventilator (14), einen Verdampfer (16), einen Verdichter (17), einen Verflüssiger (18), eine Drosselstelle (19) und einen Strömungskreislauf (20) aufweist, wobei der Ventilator (14) Zuluft (11) mit einem Volumenstrom zwischen 30 m³/h und 300 m³/h, bevorzugt zwischen 50 m³/h und 150 m³/h und besonders bevorzugt zwischen 70 m³/h und 100 m³/h fördert.

11. Verfahren nach dem vorhergehenden Anspruch,
**dadurch gekennzeichnet,**
**dass** der Zuluft in dem Spülprogramm zwischen 100 und 1000W, bevorzugt zwischen 200 und 600 W und besonders bevorzugt zwischen 300 und 400 W Wärme entzogen wird.
